Europäisches Patentamt

European Patent Office

Office européen des brevets

(11) Publication number: **0 171 032**
**B1**

# (12) EUROPEAN PATENT SPECIFICATION

(45) Date of publication of patent specification: **27.12.90**

(51) Int. Cl.[5]: **B 60 N 2/36**

(21) Application number: **85109671.9**

(22) Date of filing: **01.08.85**

(54) **Retainer device for rear seat drop backs of passenger cars.**

(30) Priority: **07.08.84 IT 5371184 u**

(43) Date of publication of application:
**12.02.86 Bulletin 86/07**

(45) Publication of the grant of the patent:
**27.12.90 Bulletin 90/52**

(84) Designated Contracting States:
**DE FR GB SE**

(56) References cited:
**US-A-3 406 998**
**US-A-3 410 600**

(73) Proprietor: **FOGGINI PROGETTI S.r.l.**
**Via Aosta, 17**
**I-10092 Beinasco Torino (IT)**

(72) Inventor: **Foggini, Paolo**
**Strada Moncalieri 2**
**I-10020 Revigliasco Torinese Torino (IT)**

(74) Representative: **Modiano, Guido et al**
**MODIANO, JOSIF, PISANTY & STAUB Modiano**
**& Associati Via Meravigli, 16**
**I-20123 Milano (IT)**

Courier Press, Leamington Spa, England.

## Description

This invention relates to a retainer device for rear seat drop backs of passenger cars, as defined in the pre-charactering part of claim 1.

As is known, modern passenger cars, and especially passenger cars of the so-called two-volume type, have a rear seat which is provided with a tilt-down or drop back serving, in the tilted down position, as load plane so as to increase the capacity of the luggage compartment.

The rear seat drop backs for passenger cars of that type are provided with retainer devices which ensure their stability when used as rear seat backs. Such retainer devices are to meet the dual and conflicting requirements of strength, to prevent the back from coming loose and tilting over as the passenger car is sharply decelerated, and of simplicity both in construction and operation.

However nowadays no retainer devices are available, which meet both requirements in a satisfactory degree.

Furthermore, a retainer device according to the pre-characterizing part of claim 1 is disclosed in US—A—3,406,998, wherein however disengagement of the hooking pin from the retainer device requires two operations for actuating the lever and manually extracting the hooking pin. Furthermore this known retainer device is not able to simultaneously assure the required safety and simplicity in operation.

A further retainer device is disclosed in US—A—3,410,600. This retainer device also requires two operations for opening the device and disengagement of the hooking pin, and furthermore is quite complicated and thus could give rise to malfunctions and jammings.

Therefore the problem arises to improve a retainer device according to the pre-characterizing part of claim 1, to obtain a device which is simpler in operation and furthermore safer.

Therefore the aim of the present invention is to solve the explained problem.

This invention achieves this aim by means of a retainer device for rear seat drop backs of passenger cars, as defined in appended claim 1.

According to the invention, moreover, in order to allow the pin to be engaged irreversibly, the seat therefor, provided on the lever, has its inlet end positioned parallel to path segment lying tangent to the pin and lobated body of the lever blocks the front opening of the box-type container and is so profiled as to bring about the snap-action swinging movement of the lever upon forcing the seat back into the hooked position and the hooking pin being passed through said front opening.

Owing to the pin/seat engagement being made irreversible, release can only occur by swinging the lever manually against the bias force of a return spring.

The invention will be more clearly understood from the following detailed description and with reference to the accompanying drawings, where:

Figure 1 is a perspective view showing a portion of a rear seat drop back incorporating the device of this invention;

Figure 2 is a detailed elevation view of the device;

Figure 3 is a front view of the device; and

Figure 4 is a sectional view taken along the line IV—IV of Figure 3.

In the drawings, the numeral 10 designates the rear seat drop back of a passenger car as indicated, and 20 the device according to the invention.

For the purpose of holding the seat back in the upright position, the device 20 is engaged with the free end of a hooking pin 11 connected rigidly to the car body load-bearing structure.

The device 20 comprises essentially a box-type container formed of two juxtaposed shells 21—22 of a polymeric material, which are irremovably conducted by a tern of riveted pins 23—24—25 serving, in addition to the connecting function, other functions to be explained herein below.

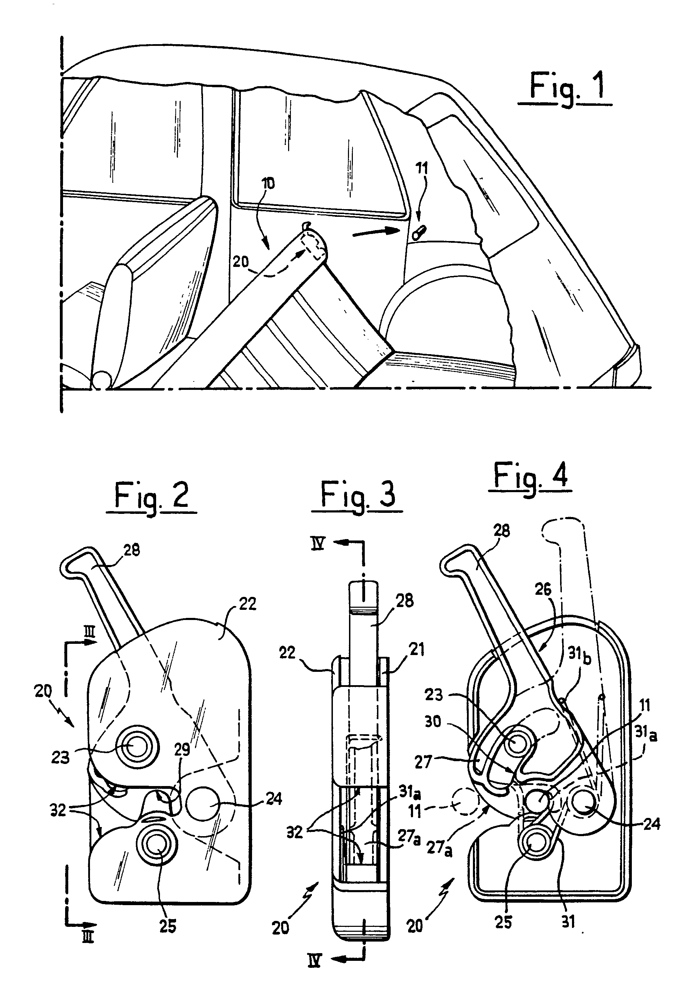

Mounted on the pin 24 (which may be also made integral with the material of the shells) is, in fact, a freely pivotable lever 26 having a lobated body 27 and a handgrip 28 coming out of the box-type container by a convenient length. In the lobated body 27, there is formed a semicircular seat 29 which opens downward (as viewed in Figures 2 and 4); the opening being, therefore, parallel to and substantially coincident with the path segment which lies tangent to the pin 11. Furthermore, the lobated body 27 is formed with a forward profile 27a adapted to be engaged by the pin 11 to produce a snap-action swinging movement of the lever upon forcing the seat back 10 into the hooked position. In the body 27 of the lever, there is also formed a slot 30 having the shape of an arc of a circle, wherein the pin 23 engages to stop the oscillation of the lever 26. That oscillation is resisted by a hairpin spring 31 having a portion wound around the pin 24 and an end 31b in engagement with the lever 26, forcing it elastically into the closed position. In this position, shown in the figures with continuous line, the surface 27a of the lobated body 27 protrudes in a front opening 32 provided in the box-type container and being intended to allow the pin 11 therethrough. Furthermore, in the closed position, the seat 29 engages with said pin to prevent self-disengagement by virtue of the seat being substantially aligned to the pivot axis of the lever 26 and having — as mentioned — its opening directed downwards.

Another portion of the hairpin 31 is wound around the pin 25 and has an end 31a protruding out of the front opening 32 laterally of the lever seat 29. The end 31a of the spring is bent to an arc of a circle with the same curvature as the pin 11 which engages and loads the end 31a on the pin being pushed into the hooked position in the front opening 32.

Thanks to the profile 27a of the lever lobated body 27, the pin 11 is engaged into the lever seat 29 with a snap action. By moving the lever in the direction allowed for by the pin 23 (clockwise as viewed in Figure 2) the pin is disengaged and is urged out by the end 31a of the spring as loaded during the hooking phase.

## Claims

1. A retainer device for rear seat drop backs of passenger cars, comprising a box-like container (21, 22) having a front opening (32) and accommodating a swingable lever (26) with a lobated body (27) defining a seat (29) adapted to receive by snap action the end of a hooking pin (11), characterized by a disengagement hairpin spring (31) arranged on the relative path of said fixed hooking pin (11) with respect to said box-like container (21, 11), said hairpin spring being engaged and loaded by said fixed hooking pin (11) during the hooking operation when the lever seat is urged to engage with the hooking pin and acting on said hooking pin to eject it from said seat (29) upon actuation of said lever (26).

2. A device according to claim 1, characterized in that the hooking pin seat (29) provided on the lever (26) is semicircular in shape, has its inlet opening position parallel to the lever path segment lying tangent to said pin, and is substantially aligned to the oscillation axis of said lever.

3. A device according to claims 1 and 2, characterized in that the lever lobated body (27) protrudes in the front opening (32) in the box-type container (21, 22) and is profiled (27a) to produce a snapping oscillatory movement of said lever (26) as the seat back (10) is being forced into the hooked position and the hooking pin is passed through said front opening (32).

4. A device according to the preceding claims, characterized in that it comprises a single hairpin spring (31) with a first portion wound around the lever pivot pin (24), provided with an end (31b) effective to resist the lever oscillatory movement, and a second portion, wound around a corresponding pin (25), the end (31a) whereof urges the hooking pin (11) out.

5. A device according to the preceding claims, wherein the spring end (31a) urging the hooking pin (11) out protrudes into the front opening (32) of the container (21, 22) laterally of the pin retaining seat (29) carried on the lever (26).

6. A device according to the preceding claims, characterized in that the box-type container is formed of a pair of juxtaposed shells (21, 22) connected by rivets (23—25), said rivets being suitably arranged so as to serve the additional functions of supporting the lever, supporting the second portion of the hairpin spring, and stopping the lever oscillatory movement.

## Patentansprüche

1. Haltevorrichtung für umklappbare Rücksitzrückenlehnen von Personenkraftwagen, it einem kastenförmigen Behälter (21, 22), der eine Frontöffnung (32) aufweist und einen schwenkbaren Hebel (26) mit einem gelappten Körper (27) aufnimmt, welcher einen Sitz (29) zur Aufnahme des Endes eines Rastbolzens (11) mittels Rastwirkung bildet, gekennzeichnet durch durch Haarnadel-Feder (31) zum Lösen, die im relativen Bewegungspfad des genannten festgelegten Rastbolzens (11) in Bezug auf den kastenförmigen Behälter (21, 22) angeordnet ist, die durch den genannten festgelegten Rastbolzen (11) während des Rastvorganges vorgespannt wird, wenn der Sitz des Armes in die Eingriffslage mit dem Rastbolzen gezwungen wird, und die auf genannten Rastbolzen einwirkt, um diesen nach Betätigung des genannten Hebels (26) aus dem Sitz (29) auszustoßen.

2. Vorrichtung nach Anspruch 1, dadurch gekennzeichnet, daß der am Hebel (26) vorgesehene sitz (29) des Rastbolzens halbkreisförmig ist, seine Einlaßöffnung parallel zum Weg des Segmentes des Hebels positioniert ist, welches tangential zum Bozlen ausgereichtet ist, und im wesentlichen mit der Schwenkachse des Hebels (26) fluchtet.

3. Vorrichtung nach Anspruch 1 und 2, dadurch gekennzeichnet, daß der gelappte Körper (27) in die Frontöffnung (32) im kastenförmigen Behälter (21, 22) hineinreicht und so profiliert (27a) ist, daß er eine schnappende schwenkende Bewegung des Hebels (26) bewirkt, wenn die Rücksitzlehne (10) in die verhakte Position gedrückt wird und der Rastbolzen (11) durch die vordere Öffnung (32) hindurchtritt.

4. Vorrichtung nach den vorhergehenden Ansprüchen, dadurch gekennzeichnet, daß sie eine einzige Haarnadel-Feder (31) umfaßt, die mit einem ersten Teil um den Hebeldrehzapfen (24) gewunden ist und das mit einem Endteil (31b) versehen ist, welches geeignet ist, der Schwenkbewegung des Hebels zu widerstehen und mit einem zweiten, um einen entsprechenden Bolzen (25) gewundenen Teil, dessen Ende (31a) den Rastbolzen (11) herausdrückt.

5. Vorrichtung nach den vorhergehenden Ansprüchen, wobei das den Rastbolzen (11) herausdrückende Federende (31a) in die vordere Öffnung (32) des Behälters (21, 22) hineinragt und zwar seitlich von dem an dem Hebel (26) getragenen Haltesitz (29) für den Rastbolzen.

6. Vorrichtung nach den vorhergehenden Ansprüchen, dadurch gekennzeichnet, daß der kastenförmige Behälter aus einem Paar nebeinandergelegter Schalen (21, 22) gebildet ist, die durch Nieten verbunden sind (23—25), wobei diese Nieten so angeordnet sind, daß sie außerdem die zusätzlichen Funktionen ausüben können, den Hebel zu tragen, den zweiten Teil der Haarnadel-Feder zu tragen und die Schwenkbewegung dies Hebels zu begrenzen.

## Revendications

1. Dispositif d'arrêt pour dossiers rabattables de sièges arrières de voitures particulières, comprenant un conteneur en forme de caisson (21, 22) possédant un orifice frontal (32) et recevant un levier pivotant (26) portant un corps lobaire (27) définissant un siège (29) adapté pour recevoir par encliquetage l'extrémité d'une broche d'accrochage (11), caractérisé par un ressort en épingle à cheveux de dégagement, disposé sur la trajectoire de ladite broche d'accrochage fixe (11) par rapport audit conteneur en forme de caisson (21, 22), ledit ressort en épingle à cheveux étant engagé et comprimé par ladite broche d'accrochage fixe (11) au moment de l'opération d'accrochage lorsque le siège du levier est poussé pour un engagement avec la broche d'accrochage et agissant sur ladite broche d'accrochage pour l'éjecter dudit siège (29) lorsque ledit levier (26) est actionné.

2. Dispositif selon la revendication 1, caractérisé par le fait que le siège de la broche d'accrochage (29) prévu sur le levier (26) est de forme semi-circulaire, qu'il a son orifice d'entrée positionné parallèlement au segment de la trajectoire du levier qui est tangent à ladite broche et qu'il est sensiblement aligné sur l'axe d'oscillation dudit levier.

3. Dispositif selon la revendications 1 et 2, caractérisé par le fait que le corps lobaire (27) du levier, fait saillie dans l'orifice frontal (32) du conteneur en forme de caisson (21, 22), et qu'il est profilé (27a) pour donner un mouvement oscillant d'encliquetage dudit levier (26) lorsque le dossier de siège (10) est poussé de force en position d'accrochage et que la broche d'accrochage traverse ledit orifice frontal (32).

4. Dispositif selon les revendications précédentes, caractérisé par le fait qu'il comprend un seul ressort (31) en épingle à cheveux, présentant une première partie enroulée autour de la goupille pivot (24) du levier, munie d'une extrémité (31b) pouvant s'opposer efficacement au mouvement oscillant du levier, et une deuxième partie, enroulée sur une broche correspondante (25), dont l'extrémité (31a) tend à chasser la broche d'accrochage (11).

5. Dispositif selon les revendications précédentes, caractérisé par le fait que l'extrémité (31a) du ressort chassant la broche d'accrochage (11) fait saillie dans l'orifice frontal (32) du conteneur (21, 22), latéralement au siège (29) d'arrêt de la broche porté par le levier (26).

6. Dispositif selon les revendications précédentes, caractérisé par le fait que le conteneur en forme de caisson est formé d'une paire de coques (21, 22) juxtaposées, reliées par des rivets (23, 25), lesdits rivets étant disposés de manière convenable pour assurer les fonctions supplémentaires de support de levier, support de la deuxième partie du ressort en épingle à cheveux, et d'arrêt du mouvement oscillant du levier.

Fig. 1

Fig. 2

Fig. 3

Fig. 4